(19) **Europäisches Patentamt**
**European Patent Office**
**Office européen des brevets**

(11) **EP 3 896 819 B1**

(12) **FASCICULE DE BREVET EUROPEEN**

(45) Date de publication et mention de la délivrance du brevet:
**09.08.2023 Bulletin 2023/32**

(21) Numéro de dépôt: **21167860.2**

(22) Date de dépôt: **12.04.2021**

(51) Classification Internationale des Brevets (IPC):
**H02J 7/00** *(2006.01)* **H02J 1/10** *(2006.01)*
**H02J 7/36** *(2006.01)*

(52) Classification Coopérative des Brevets (CPC):
**H02J 7/0013; H02J 1/109; H02J 7/0025;**
**H02J 7/0047; H02J 7/0063; H02J 7/36;**
Y02E 60/10; Y02E 60/50

(54) **ASSEMBLAGE DE CELLULES DE STOCKAGE OU DE PRODUCTION D'ÉNERGIE ÉLECTRIQUE COMPRENANT UN CIRCUIT DE GESTION DES CELLULES**

ANORDNUNG VON STROMSPEICHERZELLEN ODER STROMERZEUGUNGSZELLEN UMFASSEND EINER SCHALTUNG ZUR VERWALTUNG DER ZELLEN

ASSEMBLY OF ELECTRICAL ENERGY STORAGE CELLS OR ELECTRICAL POWER GENERATION CELLS COMPRISING A CELL MANAGEMENT CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2020 FR 2003824**

(43) Date de publication de la demande:
**20.10.2021 Bulletin 2021/42**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **SECOUARD, Christophe**
  **38054 GRENOBLE Cedex 09 (FR)**
• **DESPESSE, Ghislain**
  **38054 GRENOBLE Cedex 09 (FR)**
• **OUKASSI, Sami**
  **38054 GRENOBLE Cedex09 (FR)**

(74) Mandataire: **Atout PI Laplace**
**Immeuble "Visium"**
**22, avenue Aristide Briand**
**94117 Arcueil Cedex (FR)**

(56) Documents cités:
| | |
|---|---|
| EP-A1- 3 203 599 | CN-A- 108 666 638 |
| CN-A- 110 784 095 | JP-A- 2003 178 786 |
| US-A1- 2016 226 268 | US-A1- 2019 027 943 |

EP 3 896 819 B1

# Description

Le domaine de l'invention est celui des assemblages de cellules de stockage ou de production d'énergie électrique tels que des batteries électriques, des piles à hydrogène, et plus précisément concerne un assemblage comportant un circuit de gestion des cellules permettant d'augmenter l'énergie exploitable dudit assemblage ou encore la durée d'autonomie du système alimenté par ledit assemblage.

Le problème adressé dans la présente invention concerne la chute de capacité à fournir du courant à partir d'un certain état de charge et la durée d'autonomie des systèmes alimentés par des cellules de stockage et ou de production d'énergie électrique.

De manière générale, le régime de charge et de décharge d'une batterie peut être caractérisé par le paramètre dénommé couramment « *C-Rate* ». Une batterie de 1 mAh évaluée à 1C signifie que la batterie peut fournir 1 mA pendant une heure si elle se décharge à un régime 1C.

La capacité de stockage de la batterie, est généralement fournie par les fabricants avec les spécifications de la batterie, correspondant au produit d'heures multiplié par le courant nominal que cette batterie peut fournir à 20°C, jusqu'à atteindre une tension prédéterminée de fin de décharge de la cellule. Pour cette raison, une capacité nominale de la batterie est liée à la durée prévue de décharge.

Le Demandeur a mis en évidence une chute brutale de la capacité à fournir un courant nominal à partir d'un certain état de décharge dans le cas de microbatteries. Cette décroissance, même si elle est moins importante et plus progressive pour des batteries Li-ion de forte capacité existe également.

Cette problématique est donc d'intérêt général y compris dans le cadre d'applications de forte puissance : transport (vélo, voiture, camion, train...), systèmes autonomes (relais radio solaire, volet roulant, objets connectés...), stockage stationnaire...

De manière générale, une microbatterie est un dispositif électrochimique composé de deux électrodes (positive et négative) séparées par un isolant électrique et conducteur ionique (l'électrolyte), et dans lequel les ions (par exemple lithium) transitent d'une électrode à l'autre suivant que l'on charge ou décharge la microbatterie.

Le domaine d'application visé (internet des objets, implants médicaux, capteurs autonomes...) impose une contrainte forte sur la taille des sources d'énergie alimentant les dispositifs. L'électrode positive constitue le réservoir d'ions lithium, la quantité d'énergie stockée est directement liée à son volume (à densité constante).

Une méthode directe pour augmenter la capacité d'une microbatterie peut consister par exemple à augmenter l'épaisseur de la cathode au-delà typiquement de 10 $\mu$m. On peut également réaliser un empilement de plusieurs unités de batteries connectées en parallèle, ce qui permet de conserver un encombrement surfacique identique.

Cependant, ces solutions comportent plusieurs inconvénients :

- en raison du procédé de dépôt par pulvérisation cathodique, limité pour des épaisseurs dépassant 10 $\mu$m, l'augmentation d'épaisseur de l'électrode positive entraîne un accroissement de la défectivité de surface et de volume pouvant conduire à la défaillance de la microbatterie ;
- les microbatteries présentent une perte irréversible de capacité entre la première charge et la première décharge, d'autant plus marquée que l'épaisseur de la cathode est importante, donc particulièrement néfaste pour les électrodes positives d'épaisseur supérieure à 10 $\mu$m.

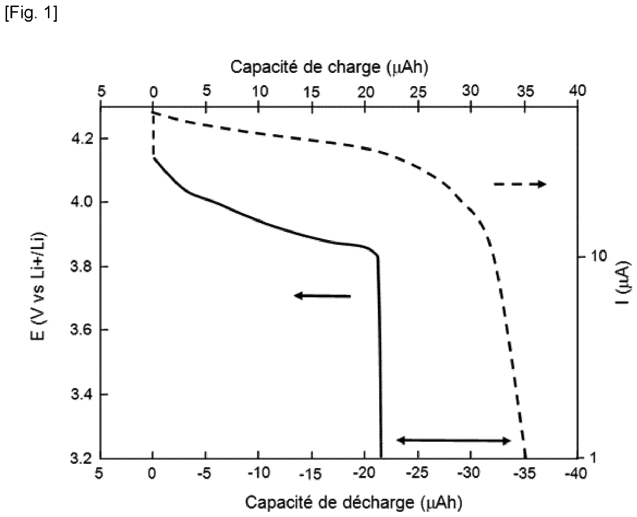

La figure 1 illustre plus précisément le courant de charge I et la différence de potentiel E (V vs Li$^+$/Li) d'une microbatterie en fonction de la capacité de charge et de la capacité de décharge pour une microbatterie à base de lithium (électrode positive en LiCoO$_2$, électrode négative en titane, électrolyte solide en LiPON).

La figure 1 montre le profil de courant (courbe en traits pointillés avec échelle de courant à droite et échelle des Ah de charge du haut) durant la charge sous un potentiel constant de 4,2V. Durant la décharge, on applique un courant fixe de -6 $\mu$A, la différence de potentiel (courbe en traits pleins avec échelle de tension à gauche et échelle d'Ah de décharge du bas) varie entre 4,2V et 3V.

La perte représentant 30% à 40% de la capacité totale, (différence entre la capacité de charge et de décharge, mise en évidence par la flèche horizontale) est due à une limitation cinétique en fin de décharge. Il est toutefois possible de contourner cette limitation mais avec une forte diminution du courant de décharge, ce qui rend impossible l'alimentation de tout composant en dehors d'un mode de veille.

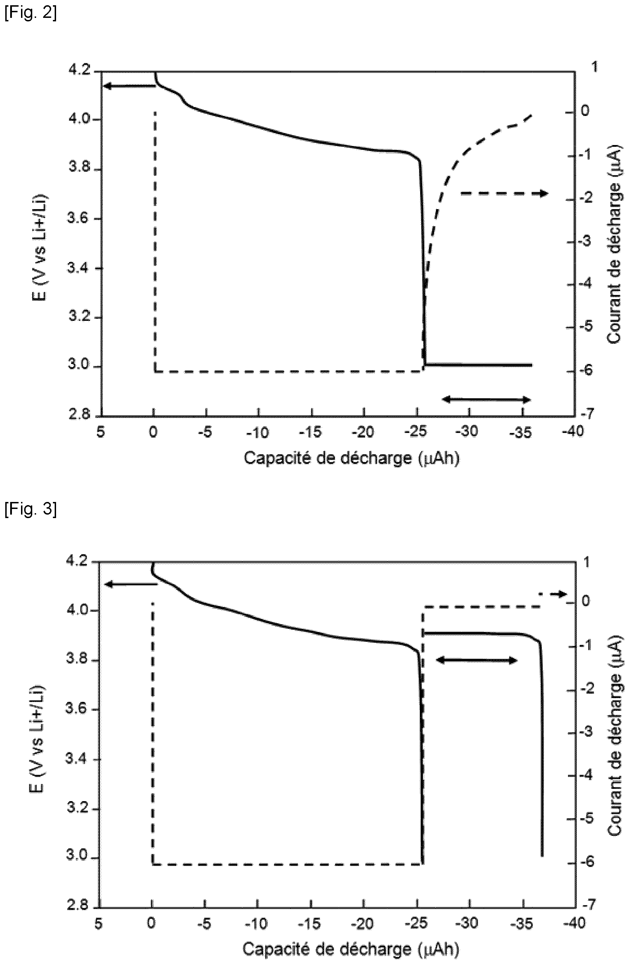

La figure 2 illustre ce cas, plus précisément, l'évolution du courant (exprimé en $\mu$A) de décharge en fonction de la capacité de décharge exprimée en $\mu$Ah. La figure 2 met aussi en évidence la différence de potentiel **E** (V vs Li$^+$/Li).

Lors du premier régime, généralement la microbatterie peut fonctionner avec un courant imposé de -6 $\mu$Ah, générant une diminution de tension aux bornes de ladite microbatterie. Lors du second régime, on peut typiquement maintenir une tension de 3V, et une diminution de courant de décharge laissé libre, passant de -6 $\mu$Ah à un courant beaucoup plus faible proche de 0.

Il est également possible dans le second régime, d'imposer un courant très faible comme le montre la figure 3.

Il est ainsi mis en évidence que dans les deux cas de figures, le courant de décharge devient très faible ne permettant plus de satisfaire l'obtention d'un courant suffisant d'alimentation, dans le second régime.

Il devient donc nécessaire d'avoir recours à un circuit de gestion de l'énergie associé aux microbatteries pour pallier les inconvénients précités.

Il est connu dans le domaine des microbatteries, et notamment décrit dans le brevet US009635147B2, Univ. of Michigan, un dispositif proposant une gestion de l'énergie pour des microbatteries empilées. Les microbatteries alimentent un réservoir de charge de type capacité dont la fonction est d'alimenter le circuit extérieur, en fournissant les pics de courant requis par l'application.

Ce réservoir de charge est régulièrement rechargé pendant le fonctionnement du dispositif par l'intermédiaire des microbatteries. Ceci constitue le principal inconvénient de cette solution, la recharge périodique induisant une limitation inhérente du débit de transmission de l'information. Par ailleurs, plus le réservoir est grand, plus il coûte en surface et en fabrication.

Il est également connu du document US009252415B2, Medtronics, la mise en parallèle de microbatteries par l'empilement de wafers, la connexion des puces se faisant par l'intermédiaire de couches de redistribution et de via, lors du processus d'empilement.

Néanmoins, dans les deux solutions précédemment décrites, la question de la perte irréversible après le premier cycle n'est pas adressée, au détriment de la capacité et de l'encombrement volumique des composants suivant l'objectif recherché, en particulier dans le cas d'épaisseurs de cathode importantes (épaisseur supérieure à 10 $\mu$m).

Le Demandeur s'est intéressé à cette perte irréversible et a notamment mis en évidence que dans un second régime de décharge de la microbatterie, qui peut représenter jusqu'à 34% de l'énergie stockée, le courant est trop faible pour assurer le fonctionnement nominal de l'application.

Le document EP3203599A1 décrit un système de stockage d'énergie électrique comprenant une pluralité de cellules de stockage d'énergie électrique et un circuit de gestion apte à adresser en mode décharge lesdites cellules en fonction d'un courant requis par la charge et dans lequel, une première cellule est adressée seule tant qu'elle est apte à fournir le courant requis par la charge, et cette première cellule est adressée en complément d'autres cellules pour fournir le courant requis par la charge si nécessaire.

Pour résoudre ce problème, le Demandeur propose un assemblage de cellules de stockage ou de production d'énergie électrique comportant un circuit de gestion d'énergie permettant d'optimiser la durée d'autonomie de l'ensemble et de garder notamment une cellule disponible dans son premier régime, tandis que la ou les autres cellules continuent de fournir du courant dans leur second régime (seconde partie de décharge). Cette solution peut être particulièrement adaptée dans le cas de microbatteries mais également pertinente dans tout autre cas de cellules de stockage ou de production d'énergie électrique et permet de continuer à fournir un courant d'application pendant une durée prolongée.

La décharge d'une cellule est priorisée de manière à exploiter au plus tôt son second régime, et les cellules suivantes sont commutées successivement de sorte à fournir le complément de courant nécessaire pour satisfaire à chaque instant les besoins de l'application. Il peut en résulter un gain de capacité de l'ordre de 30-35% en fonctionnement par rapport au cas standard où les batteries sont déchargées uniquement sur les 66 premiers %.

Il est à noter que dans le cadre de la présente invention, on définit une batterie ou cellule de stockage ou de production d'énergie électrique comme étant une cellule élémentaire ou un assemblage de cellules élémentaires placées en série et/ou parallèle.

L'assemblage de l'invention comprend un ensemble de cellules et un circuit de gestion associé, dans lequel :

- l'ensemble est composé de deux ou plusieurs cellules ;
- l'énergie est fournie de manière étagée par chacune des cellules de sorte à exploiter la totalité de leur capacité, en lissant l'effet de limitation cinétique dans le second régime ;
- les cellules peuvent être adressées simultanément à différents régimes en fonction de leur état de charge ;
- les cellules et le circuit de gestion peuvent avantageusement être contenus dans un empilement 3D ;
- dans le cas de cellules telles que les microbatteries classiques décrites en préambule, l'épaisseur de l'électrode positive peut typiquement mais de manière non limitée être supérieure à 10 $\mu$m car les pertes sont d'autant plus significatives que la capacité totale est importante.

Plus précisément l'invention a pour objet un assemblage apte à délivrer un courant de sortie $I_s$ comprenant :

- **N** cellules de stockage ou de production d'énergie électrique de rang i avec **N $\geq$ 2,** chaque cellule comprenant une cellule élémentaire ou un assemblage élémentaire de cellules élémentaires placées en série et/ou parallèle, chaque cellule de stockage ou de production d'énergie électrique étant apte à fournir à chaque instant t un courant maximal $I_{max,i}$ ;
- un circuit de gestion desdites cellules de stockage ou de production d'énergie électrique

caractérisé en ce que lesdites cellules de stockage ou de production d'énergie électrique étant classées selon leur rang **i** en priorité décroissante d'utilisation, ledit circuit de gestion comprend des moyens en mode décharge pour adresser au moins la cellule de stockage ou de production d'énergie électrique de rang **1** ou des cellules de stockage ou de production d'énergie électrique selon leur rang **i** et selon les critères suivants :

-- la cellule de stockage ou de production d'énergie électrique de rang **1** est adressée seule tant qu'elle est apte à fournir le courant de sortie **I_s** avec $I_s < I_{max1}$ ;

-- la cellule de stockage ou de production d'énergie électrique de rang **1** est adressée avec en complément un nombre **k** de cellules de stockage ou de production d'énergie électrique adressées successivement selon leur rang i de sorte à fournir à chaque instant en mode décharge le courant **I_s**, le nombre **k** étant tel que $2 < k \leq N$ et répond aux conditions suivantes :

$$\sum_{i=1}^{k-1} I_{max,i} < I_s \quad et \quad \sum_{i=1}^{k} I_{max,i} \geq I_s$$

Selon l'invention, le circuit de gestion desdites cellules de stockage ou de production d'énergie électrique comprend :

- des blocs de rang **i,** chaque cellule de stockage ou de production d'énergie électrique étant couplée à un bloc, chaque cellule couplée à un bloc étant capable de délivrer un courant de sortie ;
- l'ensemble desdits blocs générant un courant de sortie **I_s** égal à la somme des courants de sortie **I_i**, lesdits blocs sélectionnant : la première cellule de stockage ou de production d'énergie électrique jusqu'à son épuisement total, sans dépasser la valeur de courant **I_{max,1}** puis la seconde cellule de stockage ou de production d'énergie électrique jusqu'à son épuisement total sans dépasser la valeur de courant **I_{max,2}** ,...., puis la **N^{ième}** cellule de stockage ou de production d'énergie électrique.

Selon des variantes de l'invention, chaque bloc comprend un commutateur, le circuit de gestion desdites cellules de stockage ou de production d'énergie électrique assurant un pilotage par hystérésis en tout ou rien pour chacune desdites cellules de stockage ou de production d'énergie électrique.

Selon des variantes de l'invention, chaque bloc comprend un régulateur avec une tension de sortie de référence **Uth_i.** Il peut fonctionner avec une tension de sortie **V_s,** chaque bloc comprenant un régulateur fonctionnant avec un seuil de tension, et les seuils de tension des régulateurs étant tels que :

$$Uth_2 > Uth_3 > \ldots > Uth_N$$

et

-- la cellule de rang **1** est seule activée si $V_s \geq Uth_2$ pour fournir **I_{max,1}** ;

-- la deuxième cellule est activée en complément de la première cellule pour fournir un complément de courant, lorsque $V_s < Uth_2$ ;..... ;
-- la **N^{ième}** cellule est activée en complément des cellules de rang inférieur pour fournir un complément de courant lorsque $V_s < Uth_N$.

Selon des variantes de l'invention, l'assemblage fonctionne avec une tension de sortie **V_s** et est caractérisé en ce que chaque bloc comprend un convertisseur à découpage comportant une tension de consigne et apte à fournir :

- un courant en sortie lorsque la tension de sortie **V_s** est inférieure à ladite tension de consigne en vue de maintenir la tension de sortie **V_s** à la tension de consigne et
- un courant nul lorsque la tension de sortie **V_S** est supérieure à cette consigne.

Selon des variantes de l'invention, l'assemblage comprend des cellules de stockage ou de production d'énergie électrique présentant des valeurs de capacités électriques différentes.

Selon des variantes de l'invention, les cellules de stockage ou de production d'énergie électrique présentent des valeurs de capacités électriques décroissantes selon le rang **i.**

Selon des variantes de l'invention, le circuit de gestion comprend des moyens en mode recharge correspondant à un courant de sortie négatif **-Is,** pour placer l'ensemble des cellules en parallèle.

Selon des variantes de l'invention, le circuit de gestion comprend des moyens en mode recharge correspondant à un courant de sortie négatif **-I_s,** pour adresser en priorité les cellules de rang élevé, du rang **N** au rang **1.**

Selon des variantes de l'invention, les cellules élémentaires de stockage ou de production d'énergie électrique sont des batteries.

Selon des variantes de l'invention, les cellules élémentaires de stockage ou de production d'énergie électrique sont des microbatteries.

Selon des variantes de l'invention, les cellules élémentaires de stockage ou de production d'énergie électrique sont des piles à hydrogène.

Selon des variantes de l'invention, les microbatteries et le circuit de gestion sont contenus dans un empilement 3D.

L'invention sera mieux comprise et d'autres avantages apparaîtront à la lecture de la description qui va suivre donnée à titre non limitatif et grâce aux figures parmi lesquelles :

[Fig. 1] la figure 1 illustre la perte de capacité entre la première charge et la première décharge dans une microbatterie selon l'art connu ;

[Fig. 2] la figure 2 illustre le comportement en tension et courant lors d'une opération de décharge en fonction du temps et notamment dans le second régime d'une microbatterie maintenue sous une tension de 3V;

[Fig. 3] la figure 3 illustre le comportement en tension et courant lors d'une opération de décharge en fonction du temps et notamment dans le second régime d'une microbatterie maintenue avec un courant de décharge très faible ;

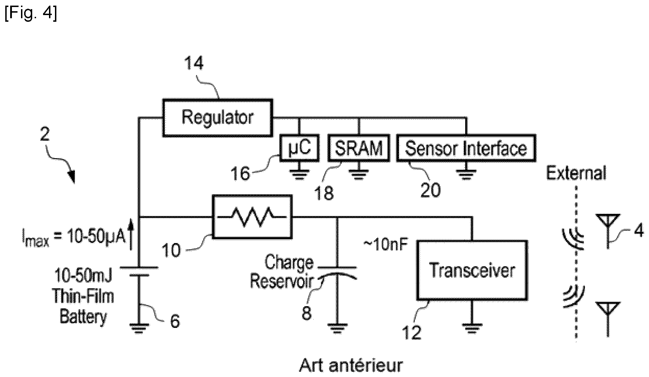

[Fig. 4] la figure 4 illustre un premier exemple de circuit de gestion de l'énergie pour des microbatteries selon l'art antérieur ;

[Fig. 5] la figure 5 illustre un deuxième exemple de circuit de gestion de l'énergie pour des microbatteries selon l'art antérieur ;

[Fig. 6 ] la figure 6 schématise un assemblage comprenant un circuit de gestion de l'énergie selon l'invention ;

[Fig. 7a] la figure 7a illustre un exemple de bloc corrélé à une cellule pouvant être utilisé dans un assemblage comprenant un circuit de gestion de l'énergie selon l'invention ;

[Fig. 7b] la figure 7b illustre un exemple de bloc corrélé à une cellule pouvant être utilisé dans un assemblage comprenant un circuit de gestion de l'énergie selon l'invention ;

[Fig. 7c] la figure 7c illustre un exemple de bloc corrélé à une cellule pouvant être utilisé dans un assemblage comprenant un circuit de gestion de l'énergie selon l'invention ;

[Fig. 8] la figure 8 illustre un exemple d'évolution de courant de sortie en fonction du temps corrélé à l'utilisation d'une, deux, trois ou quatre cellules dans un exemple d'assemblage comprenant un circuit de gestion de l'énergie fonctionnant avec un ensemble de 4 cellules, selon l'invention ;

[Fig. 9] la figure 9 illustre le comportement en courant de sortie en fonction du temps avec un exemple d'assemblage comprenant un circuit de gestion de l'énergie selon l'invention comportant deux cellules identiques ;

[Fig. 10] la figure 10 illustre le comportement en courant de sortie en fonction du temps avec un exemple d'assemblage comprenant un circuit de gestion de l'énergie selon l'invention comportant deux cellules différentes ;

[Fig. 11] la figure 11 illustre le comportement en courant de sortie en fonction du temps avec un exemple d'assemblage comprenant un circuit de gestion de l'énergie selon l'invention comportant trois cellules différentes ;

[Fig. 12] la figure 12 illustre un exemple d'assemblage comprenant un circuit de gestion de l'énergie selon l'invention comprenant des blocs à base d'interrupteurs ;

[Fig. 13] la figure 13 illustre un exemple d'algorithme de pilotage des cellules, réalisé par hystérésis en tout ou rien pouvant être utilisé dans le circuit de gestion d'un assemblage tel que celui illustré en figure 12, lors d'une opération de décharge ;

[Fig. 14] la figure 14 illustre un exemple d'algorithme de pilotage des cellules, pouvant être utilisé dans un circuit de gestion d'un assemblage selon l'invention et fonctionnant en mode linéaire défini par des tensions de seuil (fonctionnement à la décharge) ;

[Fig. 15] la figure 15 illustre un exemple d'algorithme de pilotage des cellules, pouvant être utilisé dans un circuit de gestion d'un assemblage selon l'invention et fonctionnant en mode linéaire défini par une adéquation entre courant disponible sur chaque cellule et courant demandé (fonctionnement à la décharge) ;

[Fig. 16] la figure 16 illustre un exemple d'algorithme de pilotage des cellules, pouvant être utilisé dans un circuit de gestion d'un assemblage selon l'invention et fonctionnant en mode linéaire défini par une adéquation entre courant de recharge acceptable sur chaque cellule et courant de recharge global lors d'une opération de recharge.

De manière générale, on définit dans la présente demande de brevet une cellule comme étant une cellule élémentaire de stockage ou de production d'énergie électrique ou un assemblage élémentaire de cellules élémentaires de stockage ou de production d'énergie électrique placées en série et/ou parallèle tel que décrit sur la figure suivante **6,** représentant les cellules **B$_i$** constituées d'un assemblage de sous-cellules élémentaires **CE$_{ij}$.**

La cellule élémentaire **CE$_{ij}$** est typiquement un couple électrochimique, type batterie, microbatterie, pile à hydrogène.... Cette cellule élémentaire peut être associée à d'autres cellules élémentaires en série pour atteindre une certaine tension, tel que dans une batterie plomb 12V qui associe 6 éléments en série, et/ou qui peuvent être associés en parallèle pour fournir un courant plus élevé.

Dans la description détaillée ci-après, la cellule élémentaire est une microbatterie, le circuit de gestion appliqué pouvant être néanmoins le même dans le cadre plus général de cellule élémentaire autre qu'une microbatterie.

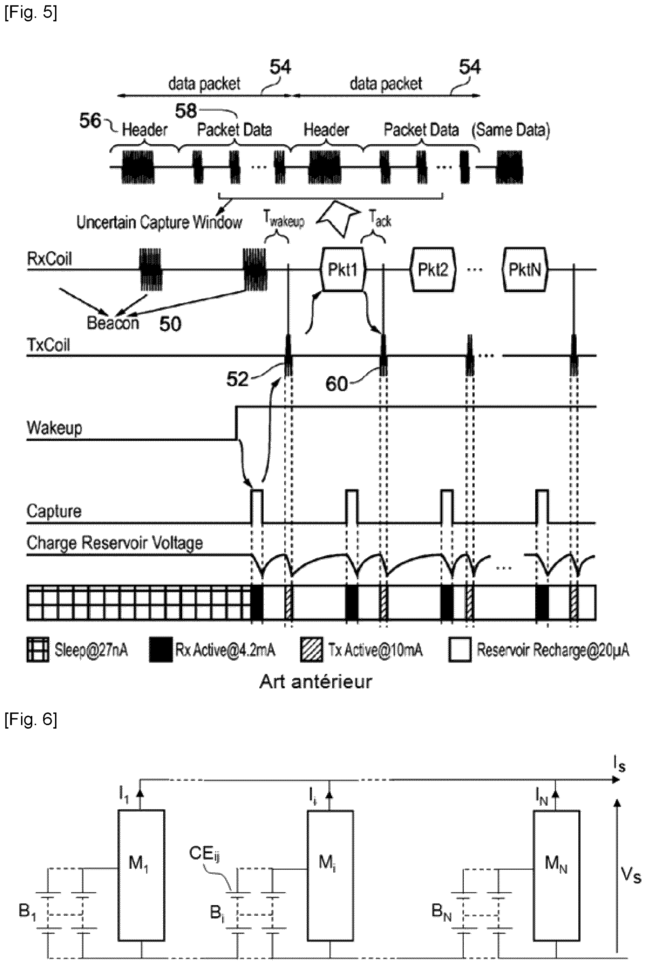

Comme présenté en figure 6, le circuit de gestion comporte des blocs $M_i$ couplés aux cellules $B_i$.

L'objectif recherché avec l'ensemble des blocs $M_i$ est de privilégier une cellule jusqu'à son épuisement total puis une seconde jusqu'à son épuisement total et etc... sans toutefois dépasser une valeur de courant maximal $I_{max,i}$ pour chacune des cellules qui dépend de l'état de charge de ladite cellule.

Le courant $I_s$ est imposé par la charge de sortie et peut fluctuer dans le temps au gré des besoins. Il résulte de la somme des courants $I_1$, $I_2$, ...$I_N$ en sortie de chacun des blocs $M_i$, sachant que chaque cellule peut fournir un courant maximal $I_{max,i}$ à chaque instant qui ne peut être dépassé.

Les blocs $M_i$ peuvent être de différentes natures et assurer un contrôle du courant par exemple par taux de connexion, par un montage abaisseur, par un régulateur de tension.

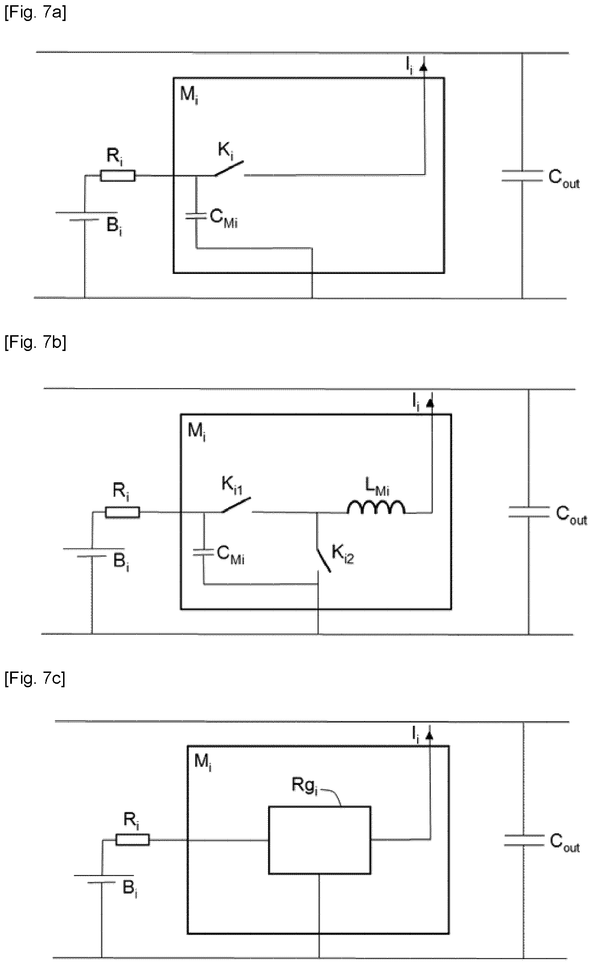

Les figures 7a, 7b et 7c illustrent 3 exemples de bloc $M_i$ couplé en entrée à une cellule $B_i$ et une résistance $R_i$ optionnelle et en sortie à une charge $C_{out}$. Plus précisément la figure 7a représente un exemple de dispositif avec filtrage et découpage série comportant un interrupteur $K_i$ et une capacité $C_{Mi}$. La figure 7b représente un exemple de dispositif convertisseur à découpage comprenant deux interrupteurs $K_{i1}$ et $K_{i2}$, une capacité $C_{Mi}$ et une inductance $L_{Mi}$. La figure 7c représente un exemple de dispositif avec un régulateur de tension $Rg_i$. Ces trois exemples de blocs $M_i$ permettent de réguler les courants permettant d'adresser ou non sélectivement les cellules couplées auxdits blocs.

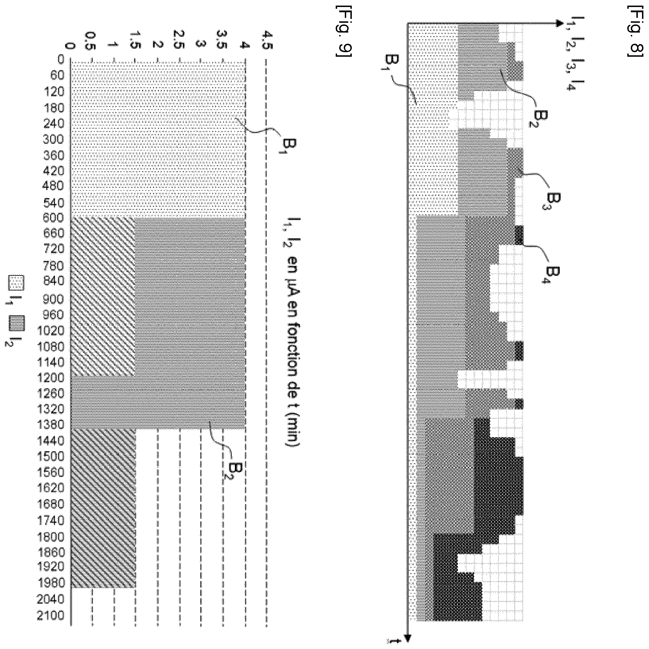

Dans un exemple, et dont l'évolution du courant de sortie $I_s$ est illustré au cours du temps en figure 8 et fonctionnant avec 4 cellules, il apparait que l'on privilégie par exemple la cellule $B_1$, puis la cellule $B_2$, puis la cellule $B_3$ et enfin la cellule $B_4$, pour satisfaire le courant demandé par la sortie à chaque instant t.

En effet selon la présente invention, les cellules sont classées selon leur rang $i$ croissant en priorité décroissante d'utilisation.

La cellule $B_1$ est adressée en priorité et si elle est en mesure de fournir un courant $I_{max,1} \geq I_s$ suffisant, elle est la seule adressée.

Si $I_{max,1} < I_s$, il est nécessaire de déterminer le nombre de cellules $k$ à adresser en respectant l'ordre de priorité permettant de satisfaire le courant de sortie requis.

La cellule de stockage ou de production d'énergie électrique $B_1$ de rang **1** est adressée avec en complément un nombre $k$ de cellules de stockage ou de production d'énergie électrique $B_i$ adressées successivement selon leur rang $i$ de sorte à fournir à chaque instant en mode décharge le courant Is, le nombre $k$ étant tel que $2 < k \leq N$, $N$ étant le nombre de cellules présentes dans l'assemblage et répond aux conditions suivantes :

$$\sum_{i=1}^{k-1} I_{max,i} < I_s \quad \text{et} \quad \sum_{i=1}^{k} I_{max,i} \geq I_s$$

Le Demandeur a réalisé des simulations avec des assemblages comprenant un nombre variable de microbatteries lithium-ion telles que celle présentée précédemment sans et avec le circuit de gestion selon l'invention permettant d'adresser successivement plusieurs microbatteries.

Les hypothèses de simulation sont les suivantes :

- besoin de l'application égale à 4 μA en continu ;
- considérant une capacité totale de 108 μAh répartie sur N microbatteries (soit par exemple 3 cellules de 36 μAh en parallèle), les premiers 72.2% de la capacité (78 μAh) sont accessibles avec un courant de premier régime en C/6 soit 18 μA (courant égal à la capacité divisé par 6 heures : 108 μAh/6h).

Les derniers 27.8% de la capacité (30 μAh) sont accessibles avec un courant de second régime égal à la capacité divisée par 36 (avec un courant de **C/36** ), soit un courant de 3 μA.

### Utilisation d'une seule cellule :

Si on n'utilise qu'une seule microbatterie de 108 μAh (pouvant être constituée de plusieurs microbatteries en parallèle), seul le courant de premier régime (18 μA) peut satisfaire l'application (4 μA), le courant de second régime égal à 3 μA étant inférieur au courant d'application de 4 μA. Seul 72.2 % de la capacité de la microbatterie est exploitable, soit 78 μAh, soit encore une autonomie de 78 μAh/4 μA=19.5h.

### Utilisation de deux cellules dans le cadre de l'invention :

Utilisation de deux cellules identiques dans le cadre de l'invention :

Soit deux cellules identiques de 54 μAh chacune (capacité globale de 108Ah), chacune ayant un courant de premier régime $I_{max}$ de 54 μAh/6=9 μA et un courant de second régime $I_{max}$ de 54 μAh/36 = 1.5 μA.

Le profil de courant en fonction du temps est illustré en figure 9 et met en évidence le profil de courant avec $I_1$ le courant tiré (4 μA) sur la première cellule et $I_2$ le courant tiré sur la seconde cellule, (le second régime est représenté hachuré par rapport au premier régime).

Les 72,2 % d'une capacité de 54 μAh peuvent fournir un courant de 4 μA durant 584,8 minutes.

Lorsque l'on passe dans le second régime de la première cellule, on ne peut plus fournir qu'un courant inférieur ou égal au courant $I_{max,1}$ du second régime établi à 1,5 μA.

On vient alors adresser la seconde cellule qui a en charge de venir fournir le courant complémentaire de 2,5 μA (complément de 4 μA - 1,5 μA), ce courant restant bien inférieur au $I_{max,2}$ de la seconde cellule dans son premier régime (9μA).

En séparant la capacité de la microbatterie en deux (en figure 9 : zone non hachurée et zone hachurée) et en privilégiant la décharge de l'une des deux, le dispositif peut fournir les 4μA demandés pendant 23.25h, soit une autonomie augmentée de 3.75h soit +19% par rapport à une seule microbatterie ayant une capacité nominale équivalente.

Au-delà de la 1395ème minute (23.25h), le dispositif ne peut fournir que 1.5μA, ce qui n'est plus suffisant pour alimenter l'application, cette énergie restante n'est donc pas utilisée.

Utilisation de deux cellules différentes et optimisées selon l'invention :

Le même raisonnement est mené en considérant deux cellules différentes pour gagner encore en autonomie et en optimisant la capacité relative des deux cellules. Le Demandeur a réalisé des simulations avec des cellules de capacités différentes et a mis en évidence un optimum avec une cellule de 86μAh et l'autre de 22μAh.

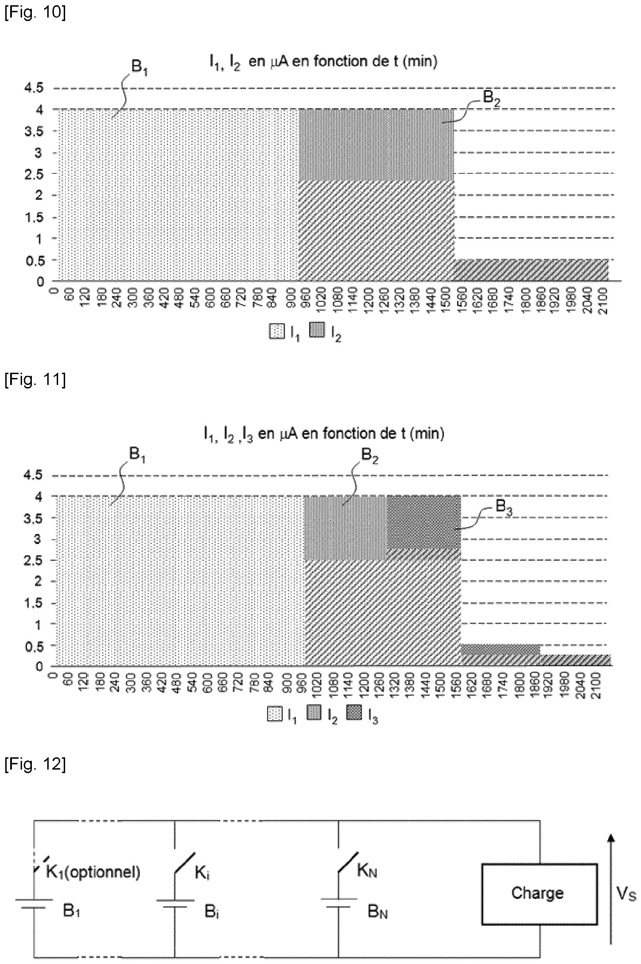

Le profil de courant obtenu avec cette optimisation de deux cellules différentes en fonction du temps est illustré en figure 10 et met en évidence le profil de courant avec $I_1$ le courant tiré sur la première cellule et $I_2$ le courant tiré sur la seconde cellule.

L'autonomie pour fournir 4μA passe alors à 25.5h, soit 2.25h de plus que précédemment et 6h de plus que dans le cas d'une seule cellule

**Utilisation de trois cellules dans le cadre de l'invention**

Utilisation de trois cellules identiques dans le cadre de l'invention :

Si on utilise 3 cellules identiques de 36 μAh (toujours 108μAh au total), l'autonomie est de 24.375h, ce qui est mieux qu'avec seulement une cellule ou deux cellules identiques mais moins bien qu'avec deux cellules bien optimisées l'une par rapport à l'autre.

Utilisation de trois cellules différentes et optimisées dans le cadre de l'invention :

Le Demandeur a mis en évidence un optimum d'autonomie avec 3 cellules respectivement de 89μAh, 11μAh et 8 μA, permettant d'obtenir une autonomie de 26.12h, soit 0.625h de plus qu'avec deux cellules optimales.

Le profil de courant obtenu avec cet optimum en fonction du temps est illustré en figure 11 et met en évidence le profil de courant avec $I_1$ le courant tiré sur la première cellule, $I_2$ le courant tiré sur la seconde cellule et $I_3$ le courant tiré sur la troisième cellule.

En conclusion, ces simulations mettent en évidence que la solution présentée dans la présente invention permet de réaliser un gain pouvant atteindre environ 33 % en termes d'autonomie (comparaison de trois cellules adressées en parallèle, et trois cellules optimisées adressées selon le circuit de gestion proposé dans la présente invention).

Premier exemple d'algorithme de pilotage des cellules dans un dispositif de stockage d'énergie comprenant un circuit de commande selon l'invention :

L'assemblage de l'invention peut être celui schématisé en figure 12 et comporter, des cellules $B_i$ couplées à des interrupteurs $K_i$.

Selon ce premier exemple, le pilotage des cellules est réalisé par hystérésis en tout ou rien comme explicité ci-après :

Soit des cellules $B_1$, $B_2$, $B_3$, ..., $B_N$ classées en priorité décroissante d'utilisation lors d'un fonctionnement en décharge ($B_1$ est celle que l'on connecte en premier et $B_N$ celle que l'on connecte en dernier).

Soit $U_{high}$ un seuil haut de tension et $U_{low}$ un seuil bas de tension, encadrant la tension de sortie $V_s$, ces seuils de tension étant relatifs au fonctionnement normal de la cellule. Il s'agit de seuils d'hystérésis qui peuvent être différents des seuils de tension minimal et maximal que la cellule peut supporter. Typiquement, $U_{low}$ peut être proche de la tension minimale de la cellule spécifiée par le constructeur (par exemple +5% à +20% de cette valeur limite) tandis que $U_{high}$ peut se situer sensiblement à mi-chemin entre les tensions min et max spécifiées par le constructeur.

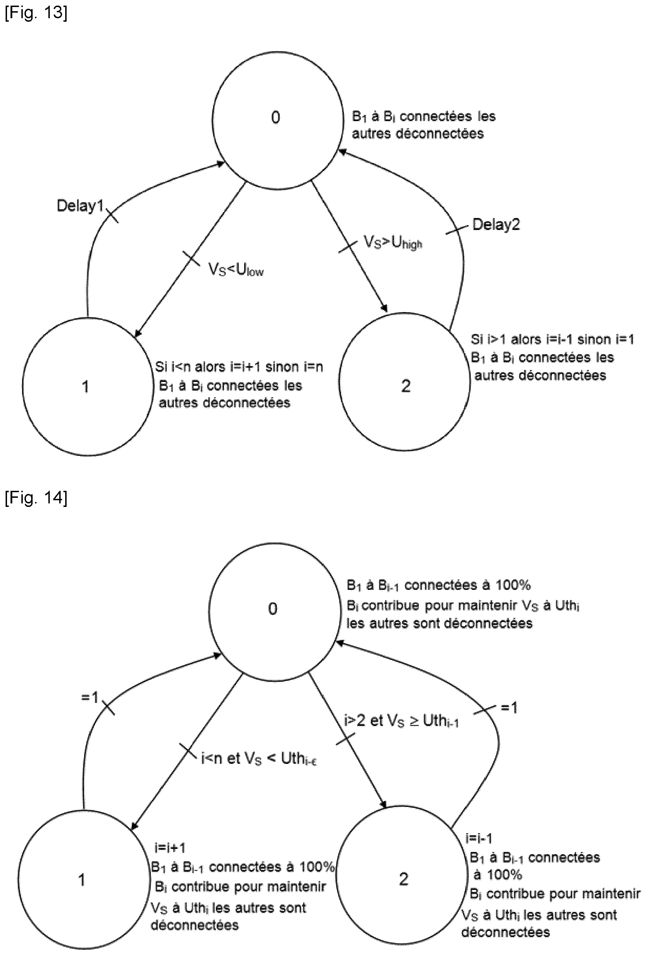

Le fonctionnement en mode décharge est le suivant :
La cellule $B_1$ est en pratique toujours connectée en mode décharge. On est dans l'état « **0** » indiqué sur la figure 13.

La tension de décharge ne doit pas descendre en deçà du seuil bas de tension $U_{low}$ pouvant typiquement être de 3V pour une batterie Li⁺/Li.

Dans un premier temps, lorsque la cellule $B_1$ est en mode décharge, tant que $V_s \geq U_{low}$, seule $B_1$ est activée et $B_1$ est apte à fournir un courant $I_{max,1}$.

Lorsque $V_s < U_{low}$, le système passe à **l'état** « **1** » de la figure 13, la cellule $B_2$ est activée en complément de la cellule $B_1$. A chaque fois que le système passe par l'état « **1** » de la figure 13 l'indice **i** est incrémenté de 1 **(i=i+1)** sauf si **i** a déjà atteint **N,** ce qui schématise la connexion de la cellule de rang supérieur $B_{i+1}$, pour fournir le courant demandé.

Après un temps de stabilisation choisi appelé **Delay1,** on retourne dans l'état « **0** », avec un ensemble de cellules connectées en mode décharge.

Ainsi le principe consiste à connecter la cellule suivante $B_{i+1}$ lorsque la tension de sortie **Vs** passe en dessous d'un seuil bas de tension $U_{low}$.

Il existe aussi une tension d'hystérésis haute de cellule $U_{High}$.

Et si la tension $V_s$ est telle que $V_s > U_{High}$, on décide de déconnecter préférentiellement la cellule connectée de plus fort indice. Cette action de déconnexion est illustrée par l'état « **2** » de la figure 13 et schématisée par le passage de **i = i-1**.

Suite à l'incrément ou au décrément du nombre de cellules connectées (dans la limite des butées **1** à **N**), un petit délai d'attente **Delay1** ou **Delay2** peut être appliqué avant de retourner à l'état « **0** », de sorte à ce que la tension de sortie ait le temps de se stabiliser à sa nouvelle valeur suite au changement de configuration et pour éviter d'avoir des commutations à trop haute fréquence (par exemple >100 kHz) liées à une situation instable entre deux valeurs de **i**.

En mode recharge, soit on met toutes les cellules en parallèle et on recharge toutes les cellules en même temps, typiquement lorsque le système de charge n'est pas vraiment limité en courant au regard du courant auquel peuvent être rechargées les cellules.

Si par contre le courant disponible pour la recharge est relativement modéré (ne peut charger toutes les cellules rapidement), alors une priorité inverse peut être appliquée en privilégiant la recharge de la cellule **N,** puis celle de la cellule **N-1** etc, de sorte à redonner rapidement la possibilité au système de fournir un courant élevé.

Deuxième exemple de dispositif de stockage d'énergie comprenant un circuit de commande selon l'invention :

Selon ce deuxième exemple, le pilotage des cellules de batteries est réalisé en mode linéaire.

En référence à la figure 6, chaque cellule $B_i$ est associée à un bloc ou circuit de gestion $M_i$. Ce circuit de gestion peut par exemple être du type de celui de la figure 7b ou celui de la figure 7c.

Ce type de circuit de gestion permet de gérer plus précisément la contribution en courant de chaque cellule au courant de sortie.

Il permet de pouvoir par exemple tirer par choix un courant plus élevé sur la cellule $B_1$ que sur la cellule $B_2$ lorsque les deux sont mises à contribution.

Le mode linéaire peut être défini par des tensions de seuil :

Le fonctionnement en mode décharge est le suivant :

Soit $Uth_2$, ... , $Uth_i$, ... , $Uth_N$, des seuils de tension en valeurs décroissantes, correspondant à des seuils de tension en entrée respectivement des blocs $M_2$, ... , $M_i$, ...., $M_N$. Lorsque la tension de sortie $V_s$ est supérieure ou égale à $Uth_2$, alors seule la première cellule $B_1$ fournit la tension de sortie.

Lorsque la tension de sortie $V_s$ tend à passer en dessous de $Uth_2$, alors la seconde cellule intervient juste ce qu'il faut pour maintenir $V_s = Uth_2$ tandis que la première cellule est connectée à 100% (comme si un switch connectait directement la première cellule à la sortie avec une très faible chute de tension).

Lorsque les deux premières cellules ne parviennent plus à maintenir la tension $Uth_2$ alors la tension $V_s$ passe en dessous de $Uth_2$ malgré les 2 premières cellules connectées à 100%.

Lorsque la tension de sortie tend à passer en dessous de $Uth_3$, alors la troisième cellule intervient juste ce qu'il faut pour maintenir $V_s$ à $Uth_3$ tandis que les deux premières cellules sont connectées à 100%.

Et etc... jusqu'à ce que la dernière cellule intervienne pour maintenir $V_s$ à une tension $Uth_N$.

Le principe de fonctionnement est aussi illustré en figure 14 sous forme graphique.

Dans l'état « **0** », les cellules $B_1$ à $B_{i-1}$ sont connectées à 100% , la cellule $B_i$ contribue pour maintenir la tension de sortie $V_s$ à la tension $Uth_i$, les autres cellules $B_{i+1}$ à $B_N$ sont déconnectées.

Lorsque $V_s$ continue à chuter et devient telle que $V_s < Uth_i - \varepsilon$, la cellule $B_i$ est adressée pour contribuer à maintenir $V_s$ égale à $Uth_i$, à cet instant on passe dans l'état « **1** »

En effet, un petit $\varepsilon$ peut être rajouté ou soustrait aux tensions de seuil pour les comparaisons de la tension $V_s$ selon que la tension $V_s$ augmente ou diminue de sorte à former un petit hystérésis et éviter des commutations intempestives autour de la tension de seuil.

De même que précédemment lorsque la tension $V_s > Uth_{i-1}$, on déconnecte la cellule de plus grand rang, et seules les $B_1$, ..., $B_{i-1}$ sont connectées.

En pratique, la mise en oeuvre d'un tel principe est simple en utilisant des régulateurs tel que décrit en figure 7c, avec pour chaque régulateur, une tension de sortie de référence $Uth_i$, avec des tensions $Uth_i$ qui décroissent avec l'indice **i**.

De même, il est également possible d'utiliser la consigne en tension de sortie sur des convertisseurs tel que décrits en figure 7b ou encore sur des systèmes à découpage série (décrits en figure 7a) ou tout autre type de convertisseur.

Il est à noter que ces convertisseurs ne fournissent un courant en sortie que lorsque la tension de sortie tend à passer en dessous de leur tension de consigne en vue de maintenir la tension de sortie à la tension de consigne désirée et que lorsque la tension de sortie est supérieure à cette consigne, le courant de sortie est nul (c'est-à-dire que la cellule est comme complètement déconnectée de la sortie).

En mode recharge, il est possible de mettre toutes les cellules en parallèle ou d'appliquer toute autre configuration via un autre montage dédié.

Le mode linéaire peut être défini par des courants disponibles :

Le circuit de gestion peut également comprendre ou être connecté à un estimateur du courant maximal $I_{max,i}$ que peut fournir la cellule $B_i$ à chaque instant.

Cet estimateur peut par exemple être basé sur un pré-enregistrement du courant maximal à ne pas dépasser sur la cellule $B_i$ en fonction de son état de charge, de sa température ... Dans ce cas le système estime l'état de charge de la cellule, par exemple en fonction de sa tension, de sa température, du nombre d'Ampères-Heures écoulé... puis détermine le courant maximal qui peut être débité sur la cellule $B_i$.

La valeur de ce courant maximal $I_{max,i}$ peut en outre avoir été déterminée pour assurer une certaine durée de vie, il ne s'agit pas alors d'un courant maximal absolu, mais d'un courant maximal conseillé pour assurer la durabilité de la batterie et/ou un certain rendement et/ou contenir un échauffement et/ou tout autre.

En pratique, il existe de nombreuses méthodes possibles pour déterminer à chaque instant ce courant maximal $I_{max,i}$ à ne pas dépasser. Il s'agit d'un maximum à chaque instant, qui pourrait être défini comme un $I_{max,i(t)}$.

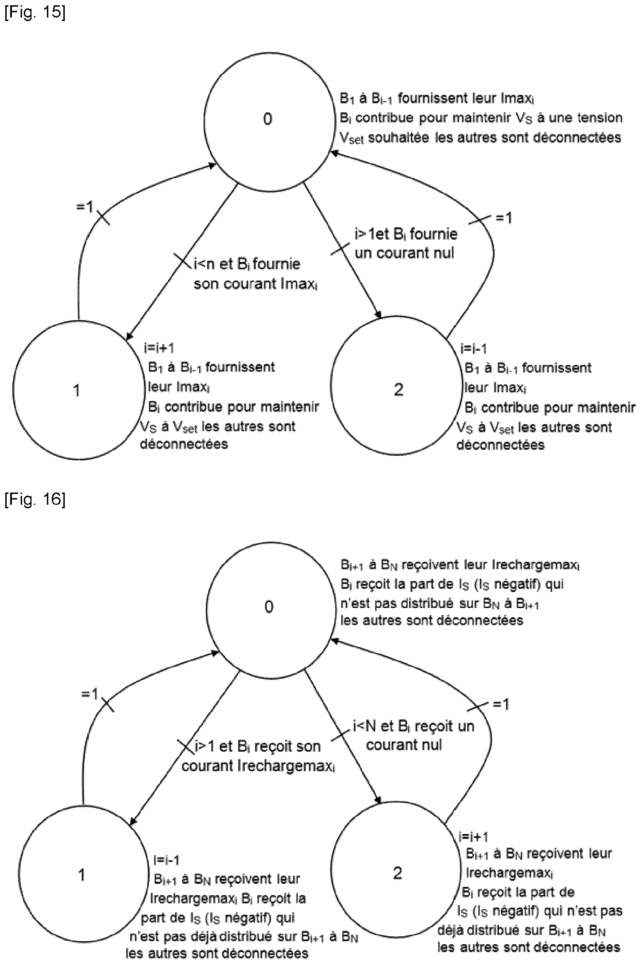

Le schéma de la figure 15 illustre les étapes de l'algorithme de gestion à la décharge avec un tel fonctionnement en mode linéaire défini par des courants disponibles.

Dans l'état « **0** », les cellules de stockage ou de production d'énergie électrique $B_1$ à $B_{i-1}$ fournissent leur courant maximum $I_{max,i}$, la cellule $B_i$ contribue pour maintenir la tension $V_s$ à une tension $V_{set}$ souhaitée, les autres cellules sont déconnectées.

A noter, sur le schéma, quand **i=1**, seule la cellule $B_1$ fournit le courant demandé pour maintenir $V_s$ à $V_{set}$.

Si la cellule connectée d'indice le plus élevé fournit un courant nul, c'est qu'elle peut être déconnectée **(i=i-1).** Inversement, si les cellules qui contribuent ne sont pas à même de maintenir la tension de sortie alors il faut mettre à contribution la cellule suivante **(i=i+1).**

L'objectif en général est d'assurer un niveau de tension en sortie d'où l'objectif de « $B_i$ contribue pour maintenir $V_s$ à une tension $V_{set}$ souhaitée », toutefois d'autres objectifs peuvent être envisagés :

- « $B_i$ contribue pour maintenir le courant de sortie **Is** à une valeur de courant souhaité $I_{set}$ (système de type source de courant) » ;
- « $B_i$ contribue pour maintenir $V_s$ à une tension $V_{set}$ souhaitée dans la limite d'un courant $I_{set}$ (système de type source de tension limité en courant) ».

La mise en oeuvre du suivi du courant $I_{max,i}$ ou de l'objectif de sortie peut se faire via l'utilisation de convertisseurs à découpage tel que décrits en figure 7b, mais d'autres structures, par exemple élévatrices, sont aussi envisageables.

Pour la recharge ($I_s$<0), on peut procéder de n'importe quelle manière, par exemple en plaçant toutes les cellules en parallèle. Une des possibilités est de faire la recharge en priorisant les cellules d'indice élevé de façon à retrouver rapidement de la capacité en courant en mode décharge (si jamais le courant **Is** s'inverse avant la fin de la recharge).

La figure 16 illustre un exemple d'algorithme de pilotage des cellules, pouvant être utilisé dans un circuit de gestion d'un assemblage selon l'invention et fonctionnant selon un ordre de priorité inverse et en respectant des courants de recharge maximale que chaque cellule peut accepter lors d'une opération de recharge.

Pour ce faire, on peut définir des courants de recharge maximale recommandés à chaque instant pour chacune des cellules $B_i$ : **Irechargemax,i.**

A noter, que sur la figure 16, quand **i=N**, l'expression « $B_{i+1}$ à $B_N$ reçoivent leur **Irechargemax,i** » n'est plus pertinente et aucune cellule ne reçoit son courant maximal. Seule la cellule $B_N$ reçoit le courant de recharge $I_s$.

Dans le cas présent, le courant de sortie $I_s$ est négatif, puisqu'il s'agit d'un courant de recharge et non de décharge.

L'assemblage de la présente invention peut avantageusement être réalisé dans un empilement 3D tels que des empilements de microbatteries décrits dans la littérature et notamment dans la référence « low-power analog techniques, sensors for mobile devices, and energy efficient amplifiers », Advances in Analog Circuit Design 2018, édité par Springer qui représente un empilement de deux microbatteries. Concernant les blocs **Mi,** il est possible d'utiliser des régulateurs de tension tel que la référence MIC5225YM5-TR de chez Microchip.

## Revendications

1.  Assemblage apte à délivrer un courant de sortie $I_s$ comprenant :

    - **N** cellules de stockage ou de production d'énergie électrique ($B_i$) de rang **i** avec **N** $\geq$ **2,** chaque cellule comprenant une cellule élémentaire ou un assemblage élémentaire de cellules élémentaires ($CE_{ij}$) placées en série et/ou parallèle, chaque cellule de stockage ou de production d'énergie électrique étant apte à fournir à chaque instant t un courant maximal $I_{max,i}$ ;
    - un circuit de gestion desdites cellules de stockage ou de production d'énergie électrique ($B_i$),

    **caractérisé en ce que** lesdites cellules de stockage ou de production d'énergie électrique étant classées selon leur rang **i** en priorité décroissante d'utilisation, ledit circuit de gestion comprend des moyens en mode décharge pour adresser au moins la cellule de stockage ou de production d'énergie électrique de rang **1** ou des cellules de stockage ou de production d'énergie électrique selon leur rang **i** et selon les critères suivants :

-- la cellule de stockage ou de production d'énergie électrique (B1) de rang 1 est adressée seule tant qu'elle est apte à fournir le courant de sortie $I_s$ avec $I_s < I_{max1}$ ;

-- la cellule de stockage ou de production d'énergie électrique ($B_1$) de rang 1 est adressée avec en complément un nombre **k** de cellules de stockage ou de production d'énergie électrique ($B_i$) adressées successivement selon leur rang **i** de sorte à fournir à chaque instant en mode décharge le courant $I_s$, le nombre k étant tel que **2 < k ≤ N** et répond aux conditions suivantes :

$$\sum_{i=1}^{k-1} I_{max,i} < I_s \text{ et } \sum_{i=1}^{k} I_{max,i} \geq I_s \text{ ;}$$

- ledit circuit de gestion desdites cellules de stockage ou de production d'énergie électrique ($B_i$) comprenant :

    -- des blocs ($M_i$) de rang **i**, chaque cellule de stockage ou de production d'énergie électrique ($B_i$) étant couplée à un bloc ($M_i$)**,** chaque cellule ($B_i$) couplée à un bloc ($M_i$) étant capable de délivrer un courant de sortie $I_i$ ;

    -- l'ensemble desdits blocs ($M_i$) générant le courant de sortie $I_S$ égal à la somme des courants de sortie $I_i$, lesdits blocs ($M_i$) sélectionnant : la première cellule de stockage ou de production d'énergie électrique jusqu'à son épuisement total, sans dépasser la valeur de courant $I_{max,1}$ puis la seconde cellule de stockage ou de production d'énergie électrique jusqu'à son épuisement total sans dépasser la valeur de courant $I_{max,2}$ ,..., puis la **$N^{ième}$** cellule de stockage ou de production d'énergie électrique.

2. Assemblage selon la revendication 1, **caractérisé en ce que** chaque bloc ($M_i$) comprend un commutateur, le circuit de gestion desdites cellules de stockage ou de production d'énergie électrique assurant un pilotage par hystérésis en tout ou rien pour chacune desdites cellules de stockage ou de production d'énergie électrique ($B_i$).

3. Assemblage selon la revendication 1, **caractérisé en ce que** chaque bloc ($M_i$) comprend un régulateur ($Rg_i$) avec une tension de sortie de référence $Uth_i$.

4. Assemblage selon la revendication 3, fonctionnant avec une tension de sortie $V_s$, chaque bloc ($M_i$) comprenant un régulateur fonctionnant avec un seuil de tension, et les seuils de tension des régulateurs ($Rg_i$) étant tels que :

$$Uth_2 > Uth_3 > \ldots > Uth_N$$

et

- la cellule de rang **1** ($B_1$) est seule activée si $V_s \geq Uth_2$ pour fournir $I_{max,1}$ ;
- la deuxième cellule ($B_2$) est activée en complément de la première cellule ($B_1$) pour fournir un complément de courant, lorsque

$$V_s < Uth_2 \text{ ;}$$

- la $N^{ième}$ cellule ($B_N$) est activée en complément des cellules de rang inférieur $B_1+B_2+\ldots B_{N-1}$ pour fournir un complément de courant lorsque $V_s < Uth_N$.

5. Assemblage selon la revendication 1, fonctionnant avec une tension de sortie **Vs, caractérisé en ce que** chaque bloc ($M_i$) comprend un convertisseur à découpage comportant une tension de consigne et apte à fournir :

- un courant en sortie lorsque la tension de sortie $V_s$ est inférieure à ladite tension de consigne en vue de maintenir la tension de sortie $V_S$ à la tension de consigne et
- un courant nul lorsque la tension de sortie $V_S$ est supérieure à cette consigne.

6. Assemblage selon l'une des revendications 1 ou 2, **caractérisé en ce qu'**il comprend des cellules de stockage ou de production d'énergie électrique présentant des valeurs de capacités électriques différentes.

7. Assemblage selon la revendication 3, **caractérisé en ce que** les cellules de stockage ou de production d'énergie électrique présentent des valeurs de capacités électriques décroissantes selon le rang **i**.

8. Assemblage selon l'une des revendications 1 à 7, **caractérisé en ce que** le circuit de gestion comprend des moyens en mode recharge correspondant à un courant de sortie négatif **-Is,** pour placer l'ensemble des cellules en parallèle.

9. Assemblage selon l'une des revendications 1 à 7, **caractérisé en ce que** le circuit de gestion comprend des moyens en mode recharge correspondant à un courant de sortie négatif **-$I_s$,** pour adresser en priorité les cellules de rang élevé, du rang **N** au rang **1.**

10. Assemblage selon l'une des revendications 1 à 9, **caractérisé en ce que** les cellules élémentaires de stockage ou de production d'énergie électrique sont des batteries.

11. Assemblage selon l'une des revendications 1 à 9, **caractérisé en ce que** les cellules élémentaires de stockage ou de production d'énergie électrique sont des microbatteries.

12. Assemblage selon l'une des revendications 1 à 9, **caractérisé en ce que** les cellules élémentaires de stockage ou de production d'énergie électrique sont des piles à hydrogène.

13. Assemblage selon la revendication 11, **caractérisé en ce que** les microbatteries et le circuit de gestion sont contenus dans un empilement 3D.

**Patentansprüche**

1. Anordnung, die zum Liefern eines Ausgangsstroms $I_s$ geeignet ist und Folgendes umfasst:

 - N Zellen zur Speicherung oder Erzeugung von elektrischer Energie ($B_i$) von Rang i mit $N \geq 2$, wobei jede Zelle eine elementare Zelle oder eine elementare Anordnung von elementaren Zellen ($CE_{ij}$) umfasst, die in Reihe und/oder parallel geschaltet sind, wobei jede Zelle zur Speicherung oder Erzeugung von elektrischer Energie zu jedem Zeitpunkt t einen maximalen Strom $I_{max,i}$ bereitstellen kann;
 - eine Schaltung zur Verwaltung der Zellen zur Speicherung oder Erzeugung von elektrischer Energie ($B_i$),

 **dadurch gekennzeichnet, dass** die Zellen zur Speicherung oder Erzeugung von elektrischer Energie gemäß ihrem Rang i in abnehmender Nutzungspriorität eingestuft sind, wobei die Verwaltungsschaltung Mittel im Entlademodus umfasst, um mindestens die Zelle zur Speicherung oder Erzeugung von elektrischer Energie von Rang 1 oder Zellen zur Speicherung oder Erzeugung von elektrischer Energie gemäß ihrem Rang i und gemäß den folgenden Kriterien zu adressieren:

 - die Zelle zur Speicherung oder Erzeugung von elektrischer Energie (B1) von Rang 1 wird allein adressiert, solange sie den Ausgangsstrom $I_s$ mit $I_s < I_{max1}$ bereitstellen kann;
 - die Zelle zur Speicherung oder Erzeugung von elektrischer Energie ($B_1$) von Rang 1 wird zusätzlich mit einer Anzahl k von Zellen zur Speicherung oder Erzeugung von elektrischer Energie ($B_i$) adressiert, die nacheinander gemäß ihrem Rang i so adressiert werden, dass sie zu jedem Zeitpunkt im Entlademodus den Strom $I_s$

bereitstellen, wobei die Anzahl k so ist, dass $2 < k \leq N$ ist und den folgenden Bedingungen entspricht:

$$\sum_{i=1}^{k-1} I_{max,i} < I_s \quad \text{und} \quad \sum_{i=1}^{k} I_{max,i} \geq I_s,$$

 - wobei die Schaltung zur Verwaltung der Zellen zur Speicherung oder Erzeugung von elektrischer Energie ($B_i$) Folgendes umfasst:
 - Blöcke ($M_i$) von Rang i, wobei jede Zelle zur Speicherung oder Erzeugung von elektrischer Energie ($B_i$) mit einem Block ($M_i$) gekoppelt ist, wobei jede mit einem Block ($M_i$) gekoppelte Zelle ($B_i$) einen Ausgangsstrom $I_i$ liefern kann;
 - wobei alle Blöcke ($M_i$) den Ausgangsstrom $I_s$ gleich der Summe der Ausgangsströme $I_i$ erzeugen, wobei die Blöcke ($M_i$) Folgendes auswählen: die erste Zelle zur Speicherung oder Erzeugung von elektrischer Energie bis zu ihrer vollständigen Erschöpfung, ohne den Stromwert $I_{max,1}$ zu überschreiten, dann die zweite Zelle zur Speicherung oder Erzeugung von elektrischer Energie bis zu ihrer vollständigen Erschöpfung, ohne den Stromwert $I_{max,2}$ zu überschreiten, ..., dann die N-te Zelle zur Speicherung oder Erzeugung von elektrischer Energie.

2. Anordnung nach Anspruch 1, **dadurch gekennzeichnet, dass** jeder Block ($M_i$) einen Schalter umfasst, wobei die Schaltung zur Verwaltung der Zellen zur Speicherung oder Erzeugung von elektrischer Energie eine Alles-oder-nichts-Hysteresesteuerung für jede der Zellen zur Speicherung oder Erzeugung von elektrischer Energie ($B_i$) gewährleistet.

3. Anordnung nach Anspruch 1, **dadurch gekennzeichnet, dass** jeder Block ($M_i$) einen Regler ($Rg_i$) mit einer Referenzausgangsspannung Uth; umfasst.

4. Anordnung nach Anspruch 3, die mit einer Ausgangsspannung $V_s$ arbeitet, wobei jeder Block ($M_i$) einen Regler umfasst, der mit einer Spannungsschwelle arbeitet, und wobei die Spannungsschwellen der Regler ($Rg_i$) so sind, dass:

$$Uth_2 > Uth_3 > \ldots > Uth_N,$$

und

 - die Zelle von Rang 1 ($B_1$) nur aktiv ist, wenn $V_s \geq Uth_2$ ist, um $I_{max,1}$ bereitzustellen;
 - die zweite Zelle ($B_2$) zusätzlich zur ersten Zelle ($B_1$) aktiviert wird, um einen zusätzlichen Strom bereitzustellen, wenn

$$V_s < Uth_2;$$

- die N-te Zelle ($B_N$) zusätzlich zu den Zellen niedrigen Rangs $B_1+B_2+....B_{N-1}$ zum Bereitstellen von zusätzlichem Strom aktiviert wird, wenn $V_s < Uth_N$ ist.

5. Anordnung nach Anspruch 1, die mit einer Ausgangsspannung $V_s$ arbeitet, **dadurch gekennzeichnet, dass** jeder Block ($M_i$) einen Schaltwandler umfasst, der eine Sollspannung aufweist und Folgendes bereitstellen kann:

- einen Ausgangsstrom, wenn die Ausgangsspannung $V_s$ kleiner als die Sollspannung ist, um die Ausgangsspannung $V_s$ auf der Sollspannung zu halten, und
- einen Nullstrom, wenn die Ausgangsspannung $V_s$ größer als dieser Sollwert ist.

6. Anordnung nach einem der Ansprüche 1 oder 2, **dadurch gekennzeichnet, dass** sie Zellen zur Speicherung oder Erzeugung von elektrischer Energie mit unterschiedlichen elektrischen Kapazitätswerten umfasst.

7. Anordnung nach Anspruch 3, **dadurch gekennzeichnet, dass** die Zellen zur Speicherung oder Erzeugung von elektrischer Energie elektrische Kapazitätswerte aufweisen, die gemäß dem Rang i abnehmen.

8. Anordnung nach einem der Ansprüche 1 bis 7, **dadurch gekennzeichnet, dass** die Verwaltungsschaltung Mittel im Auflademodus entsprechend einem negativen Ausgangsstrom -$I_s$ umfasst, um alle Zellen parallel zu schalten.

9. Anordnung nach einem der Ansprüche 1 bis 7, **dadurch gekennzeichnet, dass** die Verwaltungsschaltung Mittel im Auflademodus entsprechend einem negativen Ausgangsstrom -$I_s$ umfasst, um die hochrangigen Zellen von Rang N bis Rang 1 vorrangig zu adressieren.

10. Anordnung nach einem der Ansprüche 1 bis 9, **dadurch gekennzeichnet, dass** die elementaren Zellen zur Speicherung oder Erzeugung von elektrischer Energie Batterien sind.

11. Anordnung nach einem der Ansprüche 1 bis 9, **dadurch gekennzeichnet, dass** die elementaren Zellen zur Speicherung oder Erzeugung von elektrischer Energie Mikrobatterien sind.

12. Anordnung nach einem der Ansprüche 1 bis 9, **dadurch gekennzeichnet, dass** die elementaren Zellen zur Speicherung oder Erzeugung von elektrischer Energie Wasserstoffbrennstoffzellen sind.

13. Anordnung nach Anspruch 11, **dadurch gekennzeichnet, dass** die Mikrobatterien und die Verwaltungsschaltung in einem 3D-Stapel enthalten sind.

**Claims**

1. An assembly capable of delivering an output current $I_s$ comprising:

- N cells ($B_i$) for storing or producing electrical energy of rank i, with $N \geq 2$, each cell comprising an elementary cell or an elementary assembly of elementary cells ($CE_{ij}$) placed in series and/or in parallel, each cell for storing or producing electrical energy being capable of providing a maximum current $I_{max,i}$ at each instant t;
- a circuit for managing said cells ($B_i$) for storing or producing electrical energy,

**characterised in that** said cells for storing or producing electrical energy are classified according to their rank i in decreasing priority of use, said management circuit comprises means in discharging mode for addressing at least the cell for storing or producing electrical energy of rank 1 or cells for storing or producing electrical energy according to their rank i and according to the following criteria:

- the cell (B1) for storing or producing electrical energy of rank 1 is addressed alone as long as it is capable of providing the output current $I_s$, with $I_s < I_{max1}$;
- the cell ($B_i$) for storing or producing electrical energy of rank 1 is addressed with, in addition, a number k of cells ($B_i$) for storing or producing electrical energy successively addressed according to their rank i so as to provide, at each instant in discharging mode, the current $I_s$, the number k being such that $2 < k \leq N$ and meets the following conditions:

$$\sum_{i=1}^{k-1} I_{max,i} < I_s \quad \text{and} \quad \sum_{i=1}^{k} I_{max,i} \geq I_s ;$$

- said circuit for managing said cells ($B_i$) for storing or producing electrical energy comprising:
- blocks ($M_i$) of rank i, each cell ($B_i$) for storing or producing electrical energy being coupled to a block ($M_i$), each cell ($B_i$) coupled to a block ($M_i$) being capable of delivering an output current $I_i$;
- all said blocks ($M_i$) generating the output current $I_s$ equal to the sum of the output currents

$I_i$, said blocks ($M_i$) selecting: the first cell for storing or producing electrical energy until its total depletion, without exceeding the current value $I_{max,1}$, then the second cell for storing or producing electrical energy until its total depletion without exceeding the current value $I_{max,2}$, ..., then the $N^{th}$ cell for storing or producing electrical energy.

2. The assembly according to claim 1, **characterised in that** each block ($M_i$) comprises a switch, the circuit for managing said cells for storing or producing electrical energy ensuring an all-or-nothing hysteresis control for each of said cells ($B_i$) for storing or producing electrical energy.

3. The assembly according to claim 1, **characterised in that** each block ($M_i$) comprises a regulator ($Rg_i$) with a reference output voltage $Uth_i$.

4. The assembly according to claim 3, operating with an output voltage $V_s$, each block ($M_i$) comprising a regulator operating with a voltage threshold, and the voltage thresholds of the regulators ($Rg_i$) being such that:

$$Uth_2 > Uth_3 > .... > Uth_N,$$

and

- the cell ($B_1$) of rank 1 is only activated if $V_s \geq Uth_2$ in order to provide $I_{max,1}$;
- the second cell ($B_2$) is activated in addition to the first cell ($B_1$) in order to provide an additional current, when

$$V_s < Uth_2;$$

- the $N^{th}$ cell ($B_N$) is activated in addition to the cells $B_1+B_2+.... B_{N-1}$ of lower rank in order to provide an additional current when $V_s < Uth_N$.

5. The assembly according to claim 1, operating with an output voltage $V_s$, **characterised in that** each block ($M_i$) comprises a switching converter comprising a setpoint voltage and capable of providing:

- an output current when the output voltage $V_s$ is lower than said setpoint voltage in order to keeping the output voltage $V_s$ at the setpoint voltage; and
- a zero current when the output voltage $V_s$ is greater than this setpoint.

6. The assembly according to any of claims 1 and 2, **characterised in that** it comprises cells for storing or producing electrical energy having different electrical capacitance values.

7. The assembly according to claim 3, **characterised in that** the cells for storing or producing electrical energy have decreasing electrical capacitance values as per rank i.

8. The assembly according to any of claims 1 to 7, **characterised in that** the management circuit comprises means in recharging mode corresponding to a negative output current $-I_s$, in order to place all the cells in parallel.

9. The assembly according to any of claims 1 to 7, **characterised in that** the management circuit comprises means in recharging mode corresponding to a negative output current $-I_s$, in order to address the cells with a high rank by priority, from rank N to rank 1.

10. The assembly according to any of claims 1 to 9, **characterised in that** the elementary cells for storing or producing electrical energy are batteries.

11. The assembly according to any of claims 1 to 9, **characterised in that** the elementary cells for storing or producing electrical energy are microbatteries.

12. The assembly according to any of claims 1 to 9, **characterised in that** the elementary cells for storing or producing electrical energy are hydrogen fuel cells.

13. The assembly according to claim 11, **characterised in that** the microbatteries and the management circuit are contained in a 3D stack.

[Fig. 1]

[Fig. 2]

[Fig. 3]

[Fig. 4]

Art antérieur

[Fig. 5]

Art antérieur

[Fig. 6]

[Fig. 7a]

[Fig. 7b]

[Fig. 7c]

[Fig. 8]

[Fig. 9]

[Fig. 10]

**I₁, I₂ en μA en fonction de t (min)**

[Fig. 11]

**I₁, I₂, I₃ en μA en fonction de t (min)**

[Fig. 12]

[Fig. 13]

[Fig. 14]

[Fig. 15]

**0**

$B_1$ à $B_{i-1}$ fournissent leur $Imax_i$
$B_i$ contribue pour maintenir $V_S$ à une tension
$V_{set}$ souhaitée les autres sont déconnectées

=1

i>1et $B_i$ fournie
un courant nul

i<n et $B_i$ fournie
son courant $Imax_i$

=1

**1**

i=i+1
$B_1$ à $B_{i-1}$ fournissent
leur $Imax_i$
$B_i$ contribue pour maintenir
$V_S$ à $V_{set}$ les autres sont
déconnectées

**2**

i=i-1
$B_1$ à $B_{i-1}$ fournissent
leur $Imax_i$
$B_i$ contribue pour maintenir
$V_S$ à $V_{set}$ les autres sont
déconnectées

[Fig. 16]

**0**

$B_{i+1}$ à $B_N$ reçoivent leur $Irechargemax_i$
$B_i$ reçoit la part de $I_S$ ($I_S$ négatif) qui
n'est pas distribué sur $B_N$ à $B_{i+1}$
les autres sont déconnectées

=1

i>1 et $B_i$ reçoit son
courant $Irechargemax_i$

i<N et $B_i$ reçoit un
courant nul

=1

**1**

I=i-1
$B_{i+1}$ à $B_N$ reçoivent leur
$Irechargemax_i$ $B_i$ reçoit la
part de $I_S$ ($I_S$ négatif) qui
n'est pas déjà distribué sur $B_{i+1}$ à $B_N$
les autres sont déconnectées

**2**

i=i+1
$B_{i+1}$ à $B_N$ reçoivent leur
$Irechargemax_i$
$B_i$ reçoit la part de
$I_S$ ($I_S$ négatif) qui n'est pas
déjà distribué sur $B_{i+1}$ à $B_N$
les autres sont déconnectées

**EP 3 896 819 B1**

**Documents brevets cités dans la description**

- US 009635147 B2
- US 009252415 B2
- EP 3203599 A1